(19) Europäisches Patentamt

European Patent Office

Office européen des brevets

(11) Numéro de publication: **0 364 848**

**A1**

(12) **DEMANDE DE BREVET EUROPEEN**

(21) Numéro de dépôt: **89118704.9**

(22) Date de dépôt: **09.10.89**

(51) Int. Cl.⁵: **H01B 1/24 , H01B 13/14**

(30) Priorité: **13.10.88 FR 8813477**

(43) Date de publication de la demande:
**25.04.90 Bulletin 90/17**

(84) Etats contractants désignés:
**AT BE CH DE ES FR GB GR IT LI LU NL SE**

(71) Demandeur: **LES CABLES DE LYON**
**30, rue des Chasses**
**F-92111 Clichy Cédex(FR)**

(72) Inventeur: **Demay, Jean-Noel**
**44, rue du Py**
**F-69390 Vernaison(FR)**
Inventeur: **Mercier, Philippe**
**211, rue Benjamin Delessert**
**F-69300 Caluire(FR)**

(74) Mandataire: **Weinmiller, Jürgen et al**
**Lennéstrasse 9 Postfach 24**
**D-8133 Feldafing(DE)**

(54) Mélange semiconducteur pelable, notamment pour câbles électriques, réticulable à l'aide de silanes, et procédé de mise en oeuvre dudit mélange.

㊼ Mélange semiconducteur, réticulable à l'aide de silanes. Il comprend en proportions pondérales

    a) 70 à 80 parties de copolymère d'éthylène, ou d'éthylène et d'une autre oléfine, avec un ester du groupe constitué par l'acrylate d'éthyle, l'acétate de vinyle et l'acétate de butyle, seule une fraction de copolymère comprise entre 60 % et 75 % étant greffée à l'aide de silanes,

    b) 30 à 40 parties d'un copolymère d'acrylonitrile et de butadiène, à environ 40 % en poids d'acrylonitrile,

    c) 40 à 60 parties en poids de noir de carbone conducteur de la qualité répondant à la norme ASTM D 2516-68,

    d) 15 à 20 parties de cire microcristalline, et

    c) 1 partie d'un agent antioxygène phénolique.

Procédé de fabrication d'un câble à couche semiconductrice pelable constitué par le mélange ci-dessus.

## Mélange semiconducteur pelable, notamment pour câbles électriques, réticulable à l'aide de silanes, et procédé de mise en oeuvre dudit mélange.

La présente invention concerne un mélange semiconducteur pelable, notamment pour câbles électriques, réticulable à l'aide de silanes, et contenant du noir de carbone et un agent antioxydant phénolique, et un procédé de mise en oeuvre de ce mélange.

Celui-ci est réticulable à température modérée en présence d'eau ou de vapeur d'eau, et présente à l'état réticulé la caractéristique d'adhérer dans des conditions définies à une couche sous-jacente isolante constituée de polyéthylène, ou éventuellement d'un copolymère d'éthylène et d'une autre oléfine, ladite couche étant elle-même réticulée par un procédé quelconque ou susceptible d'être réticulée à température modérée en présence d'eau ou de vapeur d'eau.

On désire en effet obtenir dans la fabrication de certains câbles électriques, notamment à moyenne ou haute tension, au-dessus de la couche isolante réticulée, une couche semiconductrice en matériau thermoplastique réticulé qui puisse être aisément détachée de la couche isolante. Cette exigence conduit à une adhérence faible entre les deux couches. Toutefois, celle-ci ne doit pas être si faible qu'elle conduise au décollement des deux couches lorsque le câble est soumis aux diverses contraintes liées à son usage.

Cette caractéristique particulière est communément désignée par le terme "pelabilité". Elle est généralement définie par une valeur ou une fourchette de valeurs qui, dans des conditions opératoires définies, produit la séparation des deux couches.

En France, par exemple, la norme HN 33-5-23 éditée par ELECTRICITE DE FRANCE en Novembre 1981, prévoit un essai de décollement appliqué à une bande de la couche semi-conductrice de 10 mm de large découpée parallèlement aux génératrices. Une extrémité de cette bande, après avoir été décollée sur une partie de sa longueur et repliée complètement sur elle-même, doit, sur la partie restante de sa longueur, se détacher de la couche isolante lorsque l'effort de traction appliqué selon son axe est compris entre 5 et 25 Newtons à une température comprise entre 0 et 40 degrés centigrades. Des essais semblables existent dans d'autres pays.

Une propriété aussi précise ne peut pas être obtenue en utilisant un mélange semi-conducteur quelconque, tel celui qui résulterait par exemple de l'incorporation de noir de carbone conducteur au mélange réticulable isolant sous-jacent.

Par ailleurs, il est évidemment souhaitable que l'ensemble constitué par la couche isolante et la couche semi-conductrice puisse être réticulé en une seule opération, ce qui implique un procédé unique de réticulation. Ainsi on connait des isolants et des mélanges semi-conducteurs réticulables par voie chimique grâce à l'utilisation de peroxydes. Mais ce procédé nécessite un équipement encombrant et onéreux. En outre, il n'est pas techniquement très satisfaisant car il peut favoriser la création d'arborescences d'eau dans la couches isolante très préjudiciables à la durée de vie du câble.

La présente invention a pour but de procurer un mélange semiconducteur greffable à l'aide de silanes, et donc réticulable à température modérée en présence d'eau ou de vapeur d'eau, selon la technique décrite dans le document GB-A-1286460, technique connue sous le non commercial SIOPLAS ou dans une variante sous le non MONOSIL, et qui puisse être appliqué au cours d'une opération de fabrication spécifique sur une couche déjà réticulée, soit par le même procédé, soit par un procédé différent, tel la réticulation chimique à l'aide de peroxyde ou la réticulation par irradiation.

Elle a encore pour but de procurer un mélange dont l'application sur une couche isolante sous-jacente ne nécessite pas d'appareillage encombrant et onéreux, et qui évite le risque de l'apparition d'arborescences d'eau dans la couche isolante. Elle a enfin pour but de permettre d'effectuer la réticulation du mélange en même temps que celle de la couche isolante sous-jacente.

Le mélange selon l'invention est caractérisé en ce qu'il comprend :

a) 70 à 80 parties de copolymère d'éthylène, ou d'éthylène et d'une autre oléfine, avec un ester du groupe constitué par l'acrylate d'éthyle, l'acétate de vinyle et l'acétate de butyle, seule une fraction de copolymère comprise entre 60 % et 75 % étant greffée à l'aide de silanes,

b) 30 à 40 parties d'un copolymère d'acrylonitrile et de butadiène, à environ 40 % en poids d'acrylonitrile,

c) 40 à 60 parties en poids de noir de carbone conducteur de la qualité répondant à la norme ASTM- D 2516-68,

d) 15 à 20 parties de cire microcristalline, et

e) 1 parties d'un agent antioxygène phénolique.

Le greffage de polymères oléfiniques est décrit dans le document US-A-3075948.

La vitesse de réticulation du mélange dépend de l'épaisseur de la couche à réticuler et de la présence ou non dans le mélange extrudé d'une certaine quantité de catalyseur de réticulation.

Généralement, il n'est pas nécessaire d'ajouter un catalyseur de réticulation lorsque le mélange est réticulé en même temps que la couche isolante sous-jacente, lorsque celle-ci est elle-même prévue pour être réticulée selon les techniques SIOPLAS ou MONOSIL décrites dans le document GB-A-1286460. Dans ce cas, le catalyseur contenu dans la couche isolante est suffisant pour assurer dans les mêmes conditions de température et d'hygrométrie la réticulation de la couche semi-conductrice.

Dans le cas contraire, il suffit d'ajouter un catalyseur, par exemple 1 % en poids de dibutyl dilaurate d'étain, rapporté au poids de copolymère d'éthylène et d'ester, de manière connue en soi.

Il est déconseillé d'ajouter le catalyseur directement dans le mélange car il pourrait en résulter une réticulation partielle du matériau préalable à son utilisation. Il est préférable de constituer un mélange maître en incorporant le catalyseur dans une fraction des 30 à 20 parties de copolymère non greffé.

Ce mélange maître sera alors introduit par un doseur à vis, par exemple dans la trémie de l'extrudeuse, en même temps que le mélange. Le choix entre les trois copolymères d'éthylène et d'ester utilisables selon l'invention est fait en fonction des autres propriétés, en particulier physiques, auxquelles le mélange doit satisfaire, soit avant réticulation, soit après réticulation. Par exemple, un mélange réalisé avec un copolymère d'éthylène et d'acétate de vinyle à 18 % en poids d'acétate de vinyle est avantageux lorsqu'on désire réticuler à chaud en une opération spécifique une certaine longueur de câble enroulée sur une bobine ou lovée dans une cuve, car dans ce cas on n'observe aucune adhérence entre spires, même si le câble est enroulé ou lové et réticulé à la température de 70° C.

Le mélange tel que décrit laisse la possibilité de varier les proportions des constituants, en particulier pour que la couche semi-conductrice réponde exactement aux conditions imposées par la norme à laquelle le câble doit satisfaire. Ainsi, on a mis en évidence au cours d'essais préalables que l'adhérence diminue lorsqu'on diminue la quantité de copolymère de nitrile acrylique et de butadiène, et qu'on augmente d'autant la quantité de copolymère éthylénique, ou que l'on diminue la quantité de copolymère greffé et augmente d'autant la quantité de copolymère non greffé. Cette dernière modification de la composition a aussi un effet sur la souplesse du produit réticulé qui augmente.

Si l'on se réfère à la norme EDF HN 33-5-23, un mélange tout à fait satisfaisant est constitué selon la formulation précise suivante :
- 50 parties d'ELVAX 460 greffé
- 25 parties d'ELVAX 460 non greffé

ces deux produits à base de copolymère d'éthylène et d'acétate de vinyle étant vendus par la société DU PONT DE NEMOURS,
- 25 parties de KRYNAC 40-50 vendu par la Société POLYSAR
- 50 parties de noir de carbone XC 72 de la Société CABOT
- 17 parties de cérésine blanche de la Société LA CERESINE
- 1 partie d'IRGANOX 1076 vendu par la Société CIBA.

Bien que ceci n'apparaisse pas explicitement, le mélange contient un catalyseur de réticulation, qui est celui contenu dans le matériau ELVAX 460 non greffé.

Ce mélange est extrudé par exemple au-dessus d'une couche isolante réticulable, mais non réticulée, obtenue à partir du mélange réticulable 409 fourni par la Société AEI. L'ensemble est alors réticulé en quelques jours à la température et à l'humidité ambiante, ou en quelques heures si on le plonge dans une cuve remplie d'eau ou de vapeur d'eau à la température de 70° C. La force de pelage mesurée conformément à la norme EDF est de 20 Newtons à 0° C, 22 Newtons à 20° C et 17 Newtons à 40° C. Ces résultats remarquables ne sont toutefois obtenus qu'en respectant les conditions d'extrusion suivantes du mélange semi-conducteur :
- La température de la tête et de la filière d'extrusion doit être comprise entre 180° et 190° C.
- La couche isolante avant de recevoir la couche semi-conductrice doit être séchée, et sa température superficielle doit être maintenue constante entre 50 et 60° C, un accroissement de cette température augmentant rapidement l'adhérence.
- Il est nécessaire que l'ensemble poinçon-filière apporte un certain taux de compression à la matière au point d'extrusion sur la couche isolante. Ceci s'obtient par un choix judicieux du profil de l'outillage et un réglage convenable de la distance entre extrémités du poinçon et de la filière, en fonction de la composition du mélange et du profil de l'outillage.

## Revendications

1/ Mélange semiconducteur pelable, notamment pour câbles électriques, réticulable à l'aide de silanes, et contenant du noir de carbone et un agent antioxydant phénolique, caractérisé en ce qu'il comprend en proportions pondérales,

a) 70 à 80 parties de copolymère d'éthylène, ou d'éthylène et d'une autre oléfine, avec un ester du groupe constitué par l'acrylate d'éthyle, l'acétate de vinyle et l'acétate de butyle, seule une fraction de copolymère comprise entre 60 % et 75 % étant greffée à l'aide de silanes,

b) 30 à 40 parties d'un copolymère d'acrylonitrile et de butadiène, à environ 40 %. en poids d'acrylonitrile,

c) 40 à 60 parties en poids de noir de carbone conducteur de la qualité répondant à la norme ASTM D 2516-68,

d) 15 à 20 parties de cire microcristalline, et

e) 1 partie d'un agent antioxygène phénolique.

2/ Mélange selon la revendication 1, caractérisé en ce qu'il comprend en outre un catalyseur de réticulation, préalablement incorporé dans un mélange maître constitué par une partie de la fraction de copolymère non greffé d'éthylène et d'ester.

3/ Mélange selon la revendication 2, caractérisé en ce que le catalyseur de réticulation est du dibutyl dilaurate d'étain, en proportion de 1 % en poids environ par rapport au copolymère d'éthylène et d'ester.

4/ Mélange selon l'une des revendications 1 à 3, caractérisé en ce que l'ester du copolymère est l'acétate de vinyle, en proportion de 18 % en poids du total de copolymère.

5/ Procédé de fabrication d'un câble à couche semiconductrice pelable, caractérisé en ce que l'on extrude autour d'un conducteur une couche isolante réticulable de polyéthylène, ou d'un copolymère d'éthylène et d'une autre oléfine, greffé, en ce que l'on sèche la couche isolante et maintient sa surface entre 50 et 60° C, en ce que l'on extrude autour de la couche isolante le mélange selon la revendication 1 dans une extrudeuse dont la tête et la filière sont à une température de 180 à 190° C, et en ce que l'on soumet la couche isolante et la couche semiconductrice à la réticulation.

6/ Procédé selon la revendication 5, caractérisé en ce que l'on effectue la réticulation en conservant le câble quelques jours à la température ambiante après l'extrusion de la couche semiconductrice.

7/ Procédé selon la revendication 5, caractérisé en ce que l'on effectue la réticulation en maintenant le câble à 70° C en présence d'eau ou de vapeur d'eau pendant quelques heures après l'extrusion de la couche semiconductrice.

Office européen
des brevets

RAPPORT DE RECHERCHE EUROPEENNE

Numero de la demande

EP  89 11 8704

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 342 880  (M. CASTELLI et al.) <br> * En entier * <br> --- | 1,5 | H 01 B   1/24 <br> H 01 B   13/14 |
| A | US-A-4 469 538  (R.M. WADE et al.) <br> * En entier * <br> ----- | 1,5 | |

DOMAINES TECHNIQUES RECHERCHES (Int. Cl.5)

H 01 B   1/00
H 01 B   13/00

Le présent rapport a été établi pour toutes les revendications

| Lieu de la recherche | Date d'achèvement de la recherche | Examinateur |
|---|---|---|
| LA HAYE | 10-01-1990 | DROUOT M.C. |